# EUROPEAN PATENT APPLICATION

(11) **EP 1 223 023 A1**
(43) Date of publication of application: **17.07.2002**
(21) Application number: 01300363.7
(22) Date of filing: 16.01.2001
(51) Int. Cl.: B29C 47/54, B29C 47/00, B29C 55/00

(54) **Method of solventless processing PAN homopolymers or high acrylonitrile content PAN copolymers**

(71) Applicant: Bashir, Zahir, Surrey GU5 0UG (GB)
(72) Inventor: Bashir, Zahir, Surrey GU5 0UG (GB)
(74) Representative: Kinton, Colin David

(57) **Abstract**

Articles from acrylonitrile homopolymer and copolymers with an acrylonitrile content from over 95% to 100% are shaped by extrusion methods, without the aid of solvents or plasticisers. This allows the production of thick sections such as rods, tubes, by profile extrusion, and other objects that cannot be produced from high acrylonitrile-based polymers by any other method. The extruded articles can retain the orientation imparted during extrusion.

## Description

This invention relates to a method for the solventless processing of high-acrylonitrile-content polymers (including the homopolymer) and to articles obtained thereby.

It is generally considered by those skilled in the relevant art that polyacrylonitrile (PAN) homopolymer does not melt because it degrades below its melting temperature. As a consequence, it is believed that PAN homopolymer has no mouldable or extrudable state and so cannot be processed without the aid of a solvent. For example, U.S. patent 3,380,949 states that "It is known that acrylonitrile polymers including homopolymers and copolymers containing about 90% by weight or more of polymerised acrylonitrile are not thermoplastic in nature and cannot be formed at elevated temperature by milling, extrusion, compression moulding, drawing, or by other commonly employed operations normally used in the forming of shaped articles from truly thermoplastic materials".

For the solventless processing of polymers, the melting and glass transition temperatures of the material are important. The melting temperature of PAN is close to the degradation point. However, by careful experimentation using the Differential Scanning Calorimeter, it has been shown that there is an endothermic melting peak at about 320°C, just before the degradation exotherm (see P.Dunn and B.C. Ennis, Journal of Applied Polymer Science, vol. 14, pp. 1795, 1970; or W. Fester in "The Polymer Handbook," 3^{rd} edition, pp V/57, editors J. Brandrup and E.H. Immergut, publisher John Wiley and Sons, 1989). Thus 320°C will be taken as thermodynamic melting temperature of the homopolymer. The degradation that occurs almost simultaneously with melting is extremely exothermic and can be a runaway reaction; this has to be borne in mind when processing PAN without solvents. Below the melting temperature in many polymers, there is also a softening point called the glass transition. For polyacrylonitrile, the glass transition is believed to be about 85-105°C (again see W. Fester in "The Polymer Handbook").

As PAN decomposes near the melting temperature, for practical applications, it cannot be melt-processed above the melting point like other thermoplastic polymers such as polyethylene or polypropylene. Thus, all industrial polyacrylonitrile-processing currently involves solvent-based operations. Polyacrylonitrile fibres (also called acrylic fibres) are wet spun from organic solvents (e.g. N, N-dimethyl formamide, dimethyl sulphoxide, N, N-dimethyl acetamide) or inorganic solvents (NaSCN[aq.] or ZnCl₂ [aq.]) In this procedure, the polymer solution is extruded through a spinning jet immersed under water; the extruded filaments coagulate, after which they are drawn and dried. Alternatively, fibres may be dry-spun for example from N, N-dimethyl formamide solutions. In this method, the PAN solution is extruded into a heated chamber and the filaments are generated by evaporation of the solvent. Yet another procedure is "plasticised melt spinning". In this, a plasticising agent such as propylene carbonate or water is added, which depresses the melting point. The PAN-propylene carbonate acts like a pseudo- thermoplastic system. The extruded "melt" solidifies on cooling, giving filaments. These plasticised fibres may be hot drawn, but it still requires the removal and recovery of the plasticiser. Water is a cheap plasticiser; however, the main problem is that water only dissolves PAN above 185°C - that is, much above the boiling point of water at atmospheric pressure. "Melt extrusion" of PAN-water mixtures requires operation at high pressure. Also, on exit from the extruder, the filaments have to be extruded into a de-pressurisation chamber. The operation is difficult to control and the filaments show voiding (which is detrimental to properties) because the water can boil off as steam.

Likewise, processes for forming PAN films usually involve extruding polyacrylonitrile solutions through a slot die and coagulating them. Thus, solvent and plasticiser-based processes can give thin filaments and films, but they cannot give solid articles such as rods, tubes or thick sheets, which retain dimensional stability. Hence, it is unknown for such articles to be made from PAN.

Solvent-based processes are always expensive compared with melt processing because of solvent recovery and environmental problems. In order to overcome the problems that come with solvent-based processing, solventless processing of PAN would be advantageous. As the homopolymer is believed not to melt, the traditional method of making PAN melt-extrudable is to modify it by adding a comonomer. PAN copolymers with more than 5-15% comonomer become melt extrudable. Usually non-nitrile containing comonomers such as methyl acrylate are used. High comonomer content makes the polymer melt-extrudable, but this is at the expense of the good properties associated with PAN. In a recent development, U.S. patents 5,106,925 and 5,286,828 describe the production of a range of melt extrudable acrylonitrile-methacrylonitrile copolymers. Whereas normal acrylonitrile copolymers contain comonomers without nitriles, these High Nitrile materials are copolymers where the comonomer is also a nitrile-containing substance, such as methacrylonitrile. It is claimed that although there is some sacrifice in properties, these High Nitrile polymers retain some of the good gas-barrier properties of PAN homopolymer, and are melt-processable. Clearly, the inventors of US Patents 5,106,925 and 5,286,828 recognise that high nitrile-content confers desirable properties, but they have worked on the conventional premise that too high acrylonitrile (AN) content limits melt processing. Hence, these patents are restricted to a maximum AN content of 95%.

European published applications EP 0 780 498 A1, EP 0 922 567 A2 and EP 0 922 795 A2 describe melt-extrudable acrylonitrile copolymers with acrylonitrile (AN) contents upto 95% by weight, which can be used to make fibres, and multilayer articles. Again the underlying assumption is that very high acrylonitrile polymers cannot be melt processed. Thus, EP 0 780 498 A1 declares 'Acrylic and modacrylic fibres are synthetic fibres based on acrylonitrile polymers. Acrylics are high nitrile polymers and are conventionally converted into high nitrile fibres by solvent spinning techniques. Acrylic polymers have insufficient melt stability and excessively high melt viscosities so that the high nitrile polymers cannot be solventless melt-spun without decomposition'. Thus, these three patent applications limit their claims to melt-extrudable compositions with acrylonitrile levels of upto 95% by weight, with the examples given having acrylonitrile levels upto only 85% by weight.

The present applicant has found that surprisingly and contrary to all previous claims and existing processes, PAN polymers with extremely high nitrile content (96-100 % by weight of acrylonitrile), including PAN homopolymer, can be processed by continuous extrusion well below thermodynamic melting point of 320°C, without the aid of any solvent or plasticiser, thereby allowing the formation of shaped articles. Whereas the addition of comonomers (nitrile containing or otherwise) to obtain extrudability necessarily involves compromising on the properties, the possibility of using the homopolymer allows the attainment of the best properties possible from this polymer.

Accordingly, the present invention provides a method for the solventless processing of acrylonitrile polymers containing more than 95% and up to 100% by weight of acrylonitrile, characterised in that the dry polymer is heated under pressure at a temperature above its glass transition but below its melting point and is continuously or discontinuously extruded through a die or deformed to form a uniaxially or biaxially oriented article.

Deformation may be achieved, for example, by injection moulding, blow moulding, calendering, compression moulding, die drawing, pultrusion or hot drawing.

Continuous extrusion would give products such as rods, pipes and thick sheets. In certain applications, for instance injection moulding, the same process can be applied in an intermittent, discontinuous manner, using moulds with specially-designed injection gates and runners.

The present invention also provides an extruded article made by the method described in the immediately - preceding paragraph. The term "acrylonitrile polymers" as used herein is defined as those polymers containing more than 95% weight acrylonitrile. Such polymers include the homopolymer polyacrylonitrile and copolymers of acrylonitrile with one or more suitable monomers copolymerisable with acrylonitrile. Suitable comonomers include addition-polymerisable compounds containing an ethylenically unsaturated moiety such as methyl acrylate, methyl methacrylate, vinyl acetate, styrene, acrylamide, methacrylonitrile, methacrylamide, vinyl chloride, halogenated styrenes, methyl vinyl ketone, vinyl pyrollidone, vinyl pyridines, acrylic or methacrylic acid, itaconic acid, ethylene and sulphonic acids thereof. Most preferred, however, is to avoid all comonomers and use the PAN homopolymer itself, which is normally the most difficult to process.

Acrylonitrile polymers can be made by free radical or anionic polymerisation of acrylonitrile. They are usually made by polymerisation of acrylonitrile with a free radical initiator such as azoisobutyronitrile, benzoyl peroxide or redox initiators. The polymers can be made by bulk, solution, slurry or emulsion polymerisation. Anionic polymerisation can be conducted with initiators such as sodium cyanide or butyl lithium. The polyacrylonitrile polymers made by free-radical polymerisation are preferred because higher molecular weight material can be obtained with the minimum of discolouration. The polymers produced by polymerisation should preferably be in the form of a powder, or a pre-moulded object such as a billet.

Alternatively, the polymers may be in the form of chopped fibres, shredded film or granules.

The molecular weight of a polymer can be quantified by its inherent viscosity. There is no limitation on the molecular weight of the polyacrylonitrile here, but the inherent viscosities of the polymer should be preferably in the range between 0.3-15.0 dL/g as measured at 30°C in a solution of 0.5 g polymer in 100 cm 3 of dimethyl formamide. Most preferably, the inherent viscosity of the polymer lies in the range 0.7-3.0 dL/g.

Polyacrylonitrile powder, with the above characteristics can be formed into articles without the aid of solvent by a combination of applied heat, pressure and flow, in accordance with the present invention, well below the melting point of 320°C. This is because the present applicant has found that surprisingly there is an extrudable or mouldable phase above the glass-transition temperature but well below the melting point. Compression moulding is the easiest process that can be used to demonstrate the mouldable properties of PAN. Applying pressure to the heated powder at temperature in the range 130°C-220°C leads to a transparent (but amber tinted) product that clearly shows that it has been through a mouldable state. The preferable temperature range where the combination of heat and pressure reveals the mouldable or extrudable state of acrylonitrile polymers is 130°C-220°C; the most preferable temperature range is 150°C-200°C. At temperatures above 200°C, the material is still mouldable and extrudable. However, there are problems which reduce the usefulness of operating above this temperature. One reason is that the polymer starts to discolour rapidly above this temperature. At room temperature, applying a pressure such as 15 MPa leads to a flaky, semi-sintered powder, which crumbles at the slightest handling; even using higher pressures at room temperature only leads to a better sintered material. This sintered material is opaque and brittle and is very different from the sheet that has been moulded in the mouldable state between 130-220°C, which is generally amber tinted but transparent.

Compression moulding however is not a continuous process. It has been found, according to the present invention, that if heat (in the most preferred temperature range), pressure and flow are simultaneously applied (i.e. extrusion) to the PAN powder, it is possible to shape and form oriented articles such as rods, tubes and pipes, and other profiles. These are objects that cannot be produced from polyacrylonitrile by solvent-based extrusion processes, including plasticised melt extrusion. Such objects have hitherto not been produced from PAN polymers with high acrylonitrile content. One main difference in the extrusion behaviour of polyacrylonitrile polymers is the extremely high viscosity of the extrudable state, compared with the molten states of other polymers such as polyethylene. This leads to high extrusion pressures. In order to have manageable pressure drops which normally-available machines can develop, it is necessary to work with relatively low extrusion draw-ratios (defined by the ratio of cross-sectional areas of the barrel and the extrusion die). The extrusion draw-ratios should be typically greater than 1:1 and up to about 60:1. In principle, fibres can be spun from the extrudable state of PAN, but fibre spinning involves cross-section reductions of more than 300:1, so that the required extrusion pressure may become too high for conventional extrusion machines. Thus, this invention is most suitable for producing profiles with thick cross section, but fibre spinning is not ruled out. The most preferable operating range for continuous extrusion is about 150°C-200°C. Above 200°C, apart from more rapid discolouration, the major problem is that the chain crosslinking and cyclisation reactions via the nitriles start to occur more readily at elevated pressures; such reactions convert the material to a thermoset and can be dangerous in a confined space because they are exothermic. For this reason, it is preferable not to exceed 200°C.

The kind of machines most suitable for extrusion processing of PAN include the known ram extruders, and melt extruders designed to process thermally sensitive polymers, equipped with sufficiently large die-orifices, and screws designed to minimise shear heating.

The present invention will be illustrated by way of the following examples. The 100% homopolymer is used in all examples. Similar results can be obtained with a copolymer containing say 4% of a comonomer such as methyl acrylate, or 2% methyl acrylate and 1.5% itaconic acid.

### EXAMPLES

### Example 1

This example shows how to attain the mouldable state in PAN. Dry polyacrylonitrile homopolymer powder made by free-radical polymerisation was compression moulded with a square shaped mould in a hot press at 170°C and a pressure of 15 MPa for 5 minutes. This yielded a square sheet which was amber-tinted but transparent. It is clear that the powder has gone through a genuinely mouldable state whereby the powder particles have fused without leaving any sign of the particle boundaries.

### Comparative Example 2

Dry polyacrylonitrile homopolymer powder made by free-radical polymerisation was held in an oven at 170°C at atmospheric pressures for 10 minutes. The powder remained visually unchanged after this treatment. This Example illustrates that without the application of pressure, heat alone does not give rise to the mouldable state.

### Comparative Example 3

Dry polyacrylonitrile homopolymer powder made by free-radical polymerisation was compression moulded in a press at room temperature (20°C) and a pressure of 15 MPa. This yielded a white powdery slab that crumbled and flaked on handling. This material is very different from the amber-tinted but transparent sheet made in Example 1. It is clear that the powder had not gone through a mouldable state; the powder particles had not fused and the particle boundaries were present so that the pressed material did not have the integrity of a sheet. This Example shows that the mouldable state cannot be attained at room temperature, by application of pressure alone.

### Comparative Example 4

Dry polyacrylonitrile homopolymer powder made by free-radical polymerisation was compression moulded in a special small-area press under an unusually high pressure of 1000 MPa at a room temperature of 20°C, to produce a 1 cm diameter disc. The opaque disc had better integrity than the sample produced at a pressure of 15 MPa in Comparative Example 3. However, the sintered polymer was a brittle material which snapped easily on slight bending. This material was very different from the amber-tinted but transparent sheet made in Example 1. It is clear that the powder had not gone through a mouldable state at room temperature; the extraordinary pressure applied only caused sintering.

### Example 5

This Example serves to reinforce the finding that at the right temperature (above the glass-transition temperature but well below the degradation temperature) and pressure, there is a mouldable and extrudable phase in dry PAN.

PAN powder produced by free-radical polymerisation was compressed in a ram extruder, with a barrel diameter of 14 mm. The bottom of the extruder was sealed initially by means of a die insert without a hole. The polymer powder was compressed at 170°C for about 10 minutes under a pressure of 30 MPa. After this, the die insert sealing the bottom was removed and the ram was driven down to push out an amber coloured but clear billet. It was clear that the powder had undergone a fusion process that allowed it to be moulded into a billet. Remarkably, discharging of the billet in the mouldable state does not affect its shape - that is, the transparent "molten" billet retains the cylindrical shape and dimensions of the containing barrel even after it has been discharged and dropped out of the barrel.

The same experiment was repeated at 20°C. PAN powder produced by free radical polymerisation was compressed in the ram extruder at 20°C and a pressure of 30 MPa for 1 hour. This was achieved by sealing the bottom of the extruder with a die insert having no hole. After this, the die insert was removed and the ram was driven down. The material that was driven out was a flaky, semi-sintered powder. It was clear that the powder was not in the mouldable state at 20°C and a pressure of 30 MPa.

### Examples 6-11:

The following Examples serve to show that by applying pressure to the extrudable phase of polyacrylonitrile in an extruder, it is possible to extrude continuously a solid profile without the aid of solvents or plasticisers. The extrusion can be conducted with a ram extruder or other type of extruder. The most important factor is not the type of extruder but the extrusion draw-ratio defined in the following Examples, The results of the extrusion experiments of Examples 6-11 are collected together and shown in Table 1.

### Example 6

PAN was extruded using a ram extruder, with a barrel diameter of 14 mm. The ram extruder had a heated barrel. The polymer powder was compressed at 170°C for about 10 minutes prior to the extrusion. A circular die with a diameter of 6.7 mm and a land length of 2.5 mm was used. The extrusion draw-ratio EDR is given by ratio of the cross-sectional areas A₁ and A₂ of the barrel and the die respectively. Thus, EDR= A₁ / A₂ = π R² / π r² where R is the radius of the barrel's cross section and r is the radius of the capillary. In the present example, R=7 mm and r = 3.35 mm and hence EDR= 4.4. The ram velocity was 2 mm/min. and the extrusion pressure was 25 MPa (see Table 1). The extrudate was an amber coloured but transparent rod. There was little or no die swell. It was clear that the material had been deformed in the extrudable state. Trouble-free extrusion was possible. By applying a small take-up force to the extrudate, it was possible to keep the extruded rod straight in shape.

### Example 7

PAN was extruded using the ram extruder. The polymer powder was compressed at 170°C for about 10 minutes prior to the extrusion. A circular die with a diameter of 7 mm and a land length of 20 mm was used (EDR=4). The ram velocity was 2 mm/min. and the extrusion pressure was 60 MPa. The extrudate was an amber-coloured rod about 7 mm in diameter. This Example shows that increasing the die length increases the extrusion pressure dramatically, and so it is better to have short die lengths (c.f. Example 6).

### Example 8

PAN was extruded using the ram extruder. The polymer powder was compressed at 170°C for about 10 minutes prior to the extrusion. A circular die with a diameter of 3.4 mm and a land length of 2.5 mm was used (EDR= 17). The ram velocity was 2 mm/min. and the extrusion pressure was 33 MPa. The extrudate was a stiff, amber coloured rod about 3.4 mm in diameter. The as-extruded rod was oriented as revealed by X-ray examination. Remarkably, the rod had the behaviour of wood for on bending it to the breaking point, a very tough fibrillar-type of failure occurred, with the typical crackling noise emitted by wood. This Example illustrates that the PAN shaped by extrusion using a high extrusion draw-ratio (greater than about 10) is oriented and fibrillar.

### Example 9

PAN was extruded using the ram extruder. The polymer powder was compressed at 170°C for about 10 minutes prior to the extrusion. A circular die with a diameter of 2 mm and a land length of 2.5 mm was used (EDR=49). The ram velocity was 2 mm/min. and the extrusion pressure was 65 MPa (Table 1). The extrudate was a stiff, amber-coloured rod about 2 mm in diameter. The as-extruded rod was oriented as revealed by X-ray examination. The rod was smooth and transparent.

Again, the rod had the behaviour of wood for on bending it to the breaking point, a very tough fibrillar-type of failure occurred, with the typical crackling noise emitted by wood.

### Example 10

PAN was compressed at 170°C for about 10 minutes prior to extrusion. A circular die with a diameter of 1 mm and a land length of 2.5 mm was used. The EDR= 196. The ram velocity was 2 mm/min. The maximum pressure attainable was applied (90 MPa). The material would not extrude because the pressure was not sufficient. The die was removed and the material in the barrel was pushed out. The material in the barrel was an amber tinted, transparent billet; further, in the die, there was an amber coloured transparent filament (1 mm diameter) which could be pulled out. Thus, the material had attained the extrudable state, but the lack of extrudability in cases where there is a large reduction in cross section (i.e. high EDR) is caused by the extraordinarily high extrusion-pressures needed, which was beyond the capabilities of the apparatus. This Example shows that spinning of fine fibres and filaments from the extrudable phase of PAN would be difficult, but cannot be excluded.

### Example 11

In this Example, it will be shown that non-circular cross sections can also be extruded with equal ease. The polymer powder was compressed at 170°C for about 10 minutes prior to extrusion. A rectangular slot die (3 mm x 10 mm) with a full cone-angle of 90° and a die land of 20 mm was used. The ram velocity was 2 mm/min. and an extrusion pressure of 5 MPa was needed. The extrudate was a bar with a rectangular profile and was amber coloured and transparent. Thus, it should be possible to extrude thick sheets.

### Example 12

This Example shows why extrusion at temperatures over about 200°C is not recommended. The polymer powder was compressed at 220°C for about 10 minutes prior to attempted extrusion. A circular die with a diameter of 3.4 mm and a land length of 2.5 mm was used. The ram velocity was 2 mm/min., yet the material which had extruded at 170°C at 33 MPa would not extrude now (c.f. Example 8). After a pressure of about 70 MPa was reached, there was an explosive noise followed by the ejection of a cloud of black powder from the die. After removal of the die, the material in the barrel was pushed out and examined. This was a black, semi-charred, powdery billet. What had happened was that the highly exothermic degradation reaction that normally occurs at 320°C had been accelerated under the pressure and had occurred at 220°C. The degradation reaction leads to crosslinking and this removes the extrudable state of the material. Thus, this Example serves to show the importance of working well below 200°C, in order to avoid an exothermic runaway reaction. For scale-up, it is necessary to work at temperatures below 200°C. By designing the ram extruder, shear heating can be reduced and the polymer need only be heated above 150°C just near the die entrance.

### Examples 13 to 15

Further extrusions were carried out and the results are shown in TABLE 1 (below). Likewise, dry PAN may be extruded with chopped glass (or other) fibres, or with fillers, using the extrusion method disclosed herein.

**TABLE 1**

| Extrusion conditions. The ram velocity and extrusion temperature were standardised at 2 mm/min. and 170°C respectively. All dies had a full cone-angle of 90°. EDR is the extrusion draw-ratio. | | | | | |
|---|---|---|---|---|---|
| Example | Die diameter (mm) | Die length (mm) | Extrusion pressure (MPa) | EDR | Comments |
| 6 | 6.7 | 2.5 | 25 | 4.4 | little die swell |
| 7 | 7 | 20 | 60 | 4 | no die swell |
| 8 | 3.4 | 2.5 | 33 | 17 | little die swell |
| 9 | 2 | 2.5 | 65 | 49 | little die swell |
| 10 | 1 | 2.5 | 90 | 196 | unextrudable |
| 11 | 3 mm x 10 mm, slot die | 20 | 5 | 5.1 | extrudate is a bar |
| 13 | 4.7 | 2.5 | 30 | 8.9 | little die swell |
| 14 | 5 | 20 | 40 | 7.8 | no die swell |
| 15 | 2 | 20 | 70 | 49 | no die swell |

### Example 16

This example shows that PAN may be used as a mouldable matrix for fibre composites. A glass-fibre fabric was impregnated by PAN. The PAN powder may be sprinkled over the fabric such that good disperison is obtained. For good impregnation, the polymer may be alternatively applied as a solution and then dried to make a fabric with a fine coating of PAN powder left over the fibres. Alternatively, the polymer may be coated from an aqueous PAN latex, and then dried to obtain a fabric with a fine coating of PAN powder left over the fibres. The important thing is that the PAN before the final processing is in a dry state. The dried fabric may be compression moulded at 170°C and 15 MPa pressure, to obtain a laminate, where the PAN forms a transparent matrix.

This technique may also be used to form unidirectional prepregs, where parallel bundles of fibres are coated from PAN solution or latex and dried, and then moulded under heat and pressure in the range 130-220°C. Layers of prepregs can be overlaid multidirectionally and additionally moulded to give a fibre-composite article. There is no restriction on the nature of the reinforcement fibre, which may be made from a material other than glass.

Another method to form composites is co-mingling or co-weaving of the mouldable matrix in the form of fibres. Thus, the reinforcement fibre which may be glass or another high modulus fibre, is woven together with dry PAN fibres to form a mixed fabric. The laminate is formed by compression moulding above the glass transition temperature under a pressure of 15 MPa. The PAN fibres are consolidated into a continuous matrix as it passses through the mouldable phase.

### Example 17

A compression-moulded strip of PAN (1 cm x 5 cm) was made using a rectangular shaped mould at 170°C and 15 MPa, using the procedure of Eaxmple 1. This sheet was drawn at about 130°C in an oven. High draw speeds leads to cavitation, but at low draw speeds, the strip necks and draws. Thus extrudates obtained by solventless processing of PAN can be post-drawn to improve the orientation, again without introducing solvents.

### Example 18

Further, pultrusion or die drawing is also be possible (for a description of die drawing, see A. Richardson et al. in Journal of Polymer Science Physics Edition, vol. 21, pp 2525, 1983). In this method, the polymer is pre-moulded into a billet (as described in Eaxmple 5) and then drawn through a heated, conical die. Compared with ordinary extrusion, where the polymer is pushed by a backpressure, in die drawing, the shaping through the die is primarily achieved by drawing of the extrudate at the die exit.

### Example 19

A moulded billet of PAN was made by the method of Example 5, and a hole with 3 mm diameter was drilled in the middle. This gave a thick-walled cylindrical pipe. The billet with the hole was reinserted in the heated barrel. A special die insert with a heated mandrel was attached at the bottom. From the tip, the mandrel increases in cross section with a conical taper and reaches a constant diameter. The hole in the billet was located over the mandrel. The heated billet was extruded by the ram. The billet extended over the mandrel to give a biaxially-oriented, thinner-walled pipe.

## Claims

1. A method for the solventless processing of a high acrylonitrile-content polymer, **characterised in that** the polymer contains more than 95% and up to 100% by weight of acrylonitrile, the dry polymer is first heated under pressure at a temperature above its glass transition but below its melting point and is then continuously or discontinuously extruded through a die or deformed to form a uniaxially or biaxially oriented article.

2. A method according to Claim 1, **characterised in that** the polymer consists essentially of acrylonitrile homopolymer.

3. A method according to Claim 1, **characterised in that** the polymer consists essentially of a copolymer of acrylonitrile and one or more monomers copolymerisable with acrylonitrile.

4. A method according to Claim 3, **characterised in that** any one or more of said monomers comprises an addition polymerisable compound containing an ethylenically unsaturated moiety.

5. A method according to Claim 4, **characterised in that** the ethylenically unsaturated moiety is selected from the group consisting of methyl acrylate, methyl methacrylate, vinyl acetate, styrene, acrylamide, methacrylamide, methacrylonitrile, vinyl chloride, halogenated styrenes, methyl vinyl ketone, vinyl pyrollidone, vinyl pyridines, acrylic acid, methacrylic acid, itaconic acid, ethylene and sulphonic acids thereof.

6. A method according to any one of the preceding claims, **characterised in that** the polymer is heated at a temperature in the range 130-220°C.

7. A method according to Claim 6, **characterised in that** the polymer is heated at a temperature in the range 150-200°C.

8. A method according to any one of the preceding claims, **characterised in that** the polymer is subjected to a positive pressure drop.

9. A method according to any one of the preceding claims, **characterised in that** the polymer is extruded at an extrusion draw ratio greater than 1:1.

10. A method according to Claim 9, **characterised in that** the extrusion draw ratio is greater than 1:1 and up to 60:1.

11. A method according to any one of the preceding claims, **characterised in that** the polymer has an inherent viscosity (as hereinbefore defined) in the range 0.3 to 15 dL/g.

12. A method according to Claim 11, **characterised in that** the polymer has an inherent viscosity in the range 0.7 to 3.0 dL/g.

13. A method according to any one of the preceding claims, **characterised in that** the dry polymer is in the form of a powder, or a pre-moulded object such as a billet.

14. A method according to any one of Claims 1 to 12, **characterised in that** the dry polymer is in the form of chopped fibres, shredded film or granules.

15. A method according to any one of the preceding claims, **characterised in that** the dry polymer is produced by means of a free-radical initiated polymerisation process.

16. A method according to any one of the preceding claims, **characterised in that** the heated polymer is deformed by injection moulding, blow moulding, calendering, compression moulding, die drawing, pultrusion or hot drawing.
